(19) Europäisches Patentamt
European Patent Office
Office européen des brevets

(11) **EP 2 782 023 A2**

(12) **EUROPEAN PATENT APPLICATION**
published in accordance with Art. 153(4) EPC

(43) Date of publication:
**24.09.2014 Bulletin 2014/39**

(51) Int Cl.:
***G06F 17/20*** (2006.01)

(21) Application number: **12849920.9**

(22) Date of filing: **16.11.2012**

(86) International application number:
**PCT/RU2012/000945**

(87) International publication number:
**WO 2013/073999 (23.05.2013 Gazette 2013/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.11.2011 RU 2011146888**

(71) Applicant: **Obshchestvo S Ogranichennoy Otvetstvennost'yu "Tsentr Innovatsiy Natal'i Kasperskaya" Moscow 123022 (RU)**

(72) Inventors:
• **LAPSHIN, Vladimir Anatol'yevich Moscow 119634 (RU)**
• **PSHEKHOTSKAYA, Yekaterina Aleksandrovna Moscow 119021 (RU)**
• **PEROV, Dmitriy Vsevolodovich Lytkarino Moskovskaya obl. 140083 (RU)**

(74) Representative: **Spengler, Robert Potthast & Spengler Patentanwälte Küfergasse 11 89073 Ulm (DE)**

(54) **METHOD FOR THE AUTOMATED ANALYSIS OF TEXT DOCUMENTS**

(57) The invention concerns the automated analysis of text documents. Its use in development of new and improvement of the existing systems of verification of text documents for availability of phrases or parts of the text from other documents in them allows to expand the arsenal of technical facilities at the expense of creation of the comparatively quick and universal method, which allows to reveal expressions, phrases or even text fragments from other documents in the document. The method of automated analysis of text documents consists in the following: all electronic files of reference documents are transformed into the preset format, distinguishing meaningful fragments, called closures, in each; transformed electronic files of reference documents are stored in the database; each electronic file of the analyzed document is transferred into the preset format; coincidence of the distinguished closures in the electronic file of the analyzed document with the distinguished closures in the electronic files of reference documents is revealed; relative number of closures in the electronic file of the analyzed document is calculated, which coincided with the corresponding closures of each of the electronic files of reference documents; found relative numbers of coincidences are compared with the preset threshold value for revelation of availability of the text fragments from any of reference documents in the electronic file of the analyzed document.

EP 2 782 023 A2

## Description

### Art, to which the invention pertains

The present invention pertains to automated analysis of text documents and can be used in development on new and improvement of the existing systems of verification of text documents for availability of phrases and parts of the text from other documents in them.

### State of art

At present the problem of the so-called data interception is very acute. One can face such a problem in case of tracking documents, coming via the company's network, with regard to availability of confidential information in them.

At present several systems or methods are known, which allow to settle this problem.

For example patent of Russia $N_o$ 2420800 (published on 10.06.2011) discloses the method of search of similar electronic documents by the notional content, in which one sets the rules of formation of unique words, weighs unique words and ties before them, build the semantic network based on this and compare the semantic networks of documents. This method is rather labor intensive and is suitable only in the restricted area.

The application for RF patent $N_o$ 2007141666 (published on 20.05.2009) proposes the method of collection, processing and classification of target information from non-structured sources, in which one compares lexical signs of documents with control information signs. The similar solution is presented in the application for the patent of Japan $N_o$ 2008-257444 (published on 23.10.2008), which describes the devices, method and program for management of similar files. In this application one distinguishes peculiarities at the expense of use of prescribed expressions and compute the similarity between the files by means of comparison of these peculiarities. These methods also have restricted application only.

The application for US patent N° 2010/0205525 (published on 12.08.2010) describes the method for automatic classification of the text using the computer system, in which one determines qualitative characteristics of the word and frequency of appearance of these characteristics in the classified text. This method also has restricted application.

US patent N° 6810375 (published on 26.10.2004), which can be deemed the closes analogue of the present invention, discloses the method of text segmentation, in which the segments the checked text into closures from the present number of elements and verifies their linking with patterns, made according to the preset rules. Hereby they move in the line of elements by one or more positions at each stage of verification. This method take long time for processing and has restricted application.

### Disclosure of invention

Thus, there is a need in expansion of the arsenal of technical facilities at the expense of creation of a comparably fast and universal method, which would allow to reveal expressions, phrases or even text fragments from other documents in some document and which would overcome the shortcomings of known solutions.

For solution of this task and receipt of the indicated technical result the present invention proposes the method of automated analysis of text documents, consisting in the following: all electronic files of reference documents are transformed into the preset format, hereby meaningful fragments are distinguished in each of there, which are referred to as the closures; transformed electronic files of reference documents are saved in the data base; each electronic file of the analyzed document is transformed into the preset format; coincidence of the distinguished closures in the electronic file of the analyzed document with the distinguished closures in the electronic files of reference documents is revealed; relative number of closures in the electronic file of the analyzed document is calculated, which coincided with the corresponding closures of each of the electronic files of reference documents; found relative numbers of coincidences are compared with the preset threshold value for revelation of availability of the text fragments from any of reference documents in the electronic file of the analyzed document.

The peculiarity of the method under the present invention consists in the fact that the file of the text document can be preliminary transformed into the binary stream, bytes of which correspond to the significant characters or punctuation marks of the natural language, used in the mentioned text document.

Another peculiarity of the method under the present invention consists in the fact that transformation of the electronic file of the text document into the mentioned preset format can be performed at the expense that: a lot of significant characters, as well as punctuation marks are pre-distinguished in each of natural languages used; closures are distinguished from the text of the transformed document; insignificant symbols are deleted from each closure; all remaining significant characters of each closure are transformed into the lower case, getting the so-called shingle; hash-value of each shingle is calculated; a pair from the calculated hash-value of each shingle and position of this shingle in the document is placed into the inverted process of the corresponding document, represented the sorted list of pairs with the identifier of this document.

One more peculiarity of the method under the present invention consists in the fact that transformation of the binary stream into the mentioned preset format can be performed at the expense that: a lot of significant characters, as well as punctuation marks are pre-distinguished in each of natural languages used; closures are distinguished from the text of the transformed document;

insignificant symbols are deleted from each closure; all remaining significant characters of each closure are transformed into the lower case, getting the so-called shingle; hash-value of each shingle is calculated; shingles and their hash-values are selected randomly from the pre-set interval in each binary document; a pair from the calculated hash-value of each selected shingle and position of this shingle in the document is placed into the inverted process of the corresponding document, represented the sorted list of pairs with the identifier of this document.

Finally, another peculiarity of the method under the present invention consists in the fact that calculation of the relative number of coincidences, referred to as the similarity factor, is performed in accordance with the expression:

$$r(D_d, D_e) = \frac{|D_e| \cap |D_d|}{|D_e|},$$

where $D_d$ - reference document, $D_e$ - analyzed document, $|D|$- number of shingles, found in the document $D$, $r(D_d, D_e)$ - similarity factor.

**Brief description of drawings**

Pic. 1 presents the example of the text document, to which the method under the present invention is applied.
Pic. 2 presents the sequence of shingles, obtained from the document in Pic. 1.

**Detailed description of the invention**

The present invention can be implemented in any computation system, for example, in the personal computer, in the server, etc. For implementation of the invention it is also required to have the corresponding database, in which the electronic files of text documents are kept.

The method of automated analysis of text documents under the present invention is intended for the so-called copyright analysis (English analogue - fingerprint detection), the task of which is to establish similarity of binary and (or) text documents with the documents, transferred earlier to the data base (library) as reference. Binary documents are reviewed as the stream of bytes (binary stream), that is why for the documents of this class only the similarity measure is determined, which is expressed as the measure of the share of the evaluated document in the reference document (number from zero to one). For the text documents common text fragments for the evaluated and reference documents are also found with indication of their positions in the reference document. The algorithm works with the accuracy of up to 80 significant characters, for which alphabet characters and digits are taken. As per the security requirements, texts of reference documents are not kept, which allows to avoid their unauthorized reading.

As a rule, the electronic file of the text document are preliminary transformed into the binary stream, bytes of which correspond to the significant characters or punctuation marks of the natural language, used in the mentioned text document. This stage is not obligatory, since such transformation will not be required in analysis of the document, coming, for example, via the network as the already formed stream of bytes.

However the binary stream in method under the present invention is first transformed into the specialized format for further processing. It is preferable to perform such transformation of the binary stream into the preset format as follows.

Since different natural languages can be used as the language of the analyzed text document, a lot of its significant characters, as well as punctuation marks are first pre-distinguished in each of the natural languages used. For example, in Japanese symbol «о» is the sentence termination symbol, and in Spanish symbol «¿» can be met in the beginning of the sentence. Certain bytes are placed in compliance with all such significant characters and punctuation marks of the specific language, the aggregate of which forms the basis for further processing of the text in this natural language. This preliminary stage is implemented by the specialists in the automated mode.

When the document comes in the specific natural language for processing under the stated method, the so-called closures are distinguished from this text, i.e. meaningful text fragments. This stage is also implemented by the specialists in the automated mode. All subsequent stages can be implemented automatically without engagement of operators.

All insignificant characters are deleted from each distinguished closure, for example, spaces. The remaining meaningful symbols of each closure are transformed into the lower case, i.e. capital letters are replaced for lower case ones, as a result the so-called shingle is obtained, i.e. byte line. For each shingle its hash-value is calculated using the preset hash-function, as the specialists know.

Shingles and their hash-values are selected randomly in each binary documents from the preset interval. If the document comes for processing already in the form of the binary stream, the stage of this choice is omitted. Then a pair from the calculated hash-value of each shingle and position of this shingle in the document is placed into the inverted process of the corresponding document, representing the sorted range of the above pairs with the identifier of this document. In this description the position of the shingle shall mean the indication to the beginning of this shingle, counted from its end.

That is why the document index is called the inverted index.

The example of transformation of the document into such a format is given in Pic. 1 and 2. Pic. 1 gives a fragment of the approximate document, and Pic. 2 shows shingles formed for this document.

The given example of transformation into the preset format serves only for illustration purposes, and any other formats can also be used for transformation of closures into shingles. For example, closures can have equal length, or special signs of the symbols can be noted in shingles (capital letters, spaces, etc.).

The above (or any other possible) transformation is executed on the so-called reference documents. This can be both pre-established documents, and new ones, coming for analysis already in the process of work, documents, to which the status of references ones is conferred. Information on such reference documents, i.e. their inverted indices are kept in the database.

When the electronic file of any analyzed document comes, it is transformed into the same preset format. Then coincidence of the distinguished closures of the analyzed document with the distinguished closures of reference documents is revealed. This can be made by coincidence of the above shingles with the corresponding shingles of reference documents, or any other method, known to the specialists, for example, so, as it is done in the mentioned US patent N° 6810375.

In this revelation of coincidences the relative number of closures in the analyzed document is calculated, which coincided with the corresponding closures of each of reference documents. This calculation of the relative number of coincidences, which is called the similarity factor, is performed, for example, in accordance with expression:

$$r(D_d, D_e) = \frac{|D_e| \cap |D_d|}{|D_e|},$$

where $D_d$ - reference document, $D_e$ - analyzed document, $|D|$ - number of shingles, found in the document $D$, $r(D_d, D_e)$ - similarity factor. Specialists understand that such calculation can also be made by other method, for example, so, as in the mentioned application for US patent № 2010/0205525.

After calculation of coincidences found relative numbers of coincidences are compared with the preset threshold value for revelation of availability of text fragments of any of reference documents in the analyzed document. Hereby the statistic measure of relevance of the analyzed document with the available reference documents is obtained.

If required, the position of the closure in the analyzed document, which coincided with the similar closure in any reference document, can be found by its inverted index.

It should be emphasized that these reference documents are kept in the database in the form of mentioned inverted indices, which allows to avoid their unauthorized reading.

Thus, the method of automated analysis of text documents under the present invention ensures expansion of the arsenal of technical facilities and allows to revealed expressions, phrases or even text fragments from other documents in any document comparatively quickly, thus overcoming the shortcomings of known solutions in the form of their restricted application.

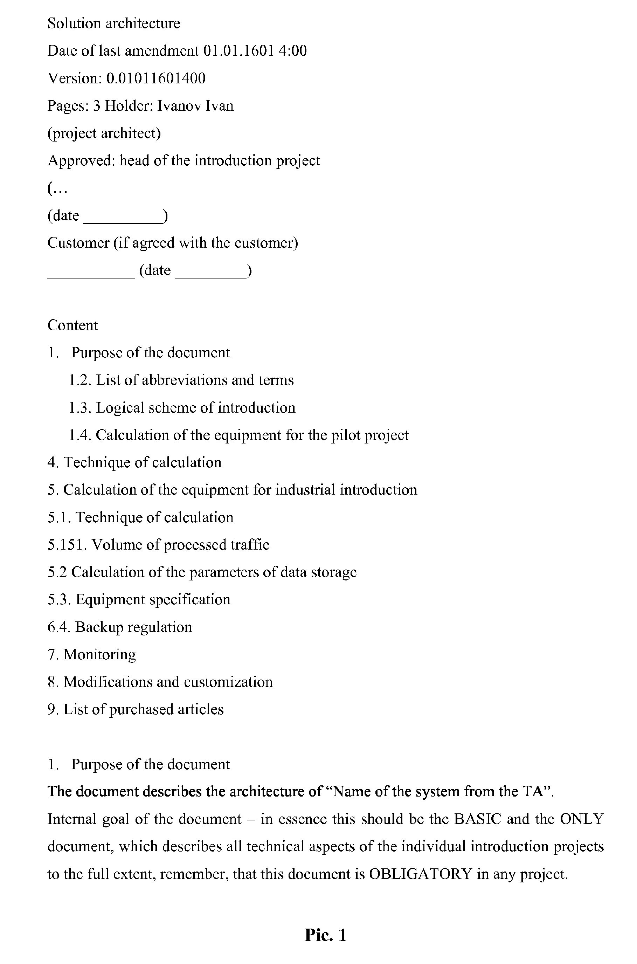

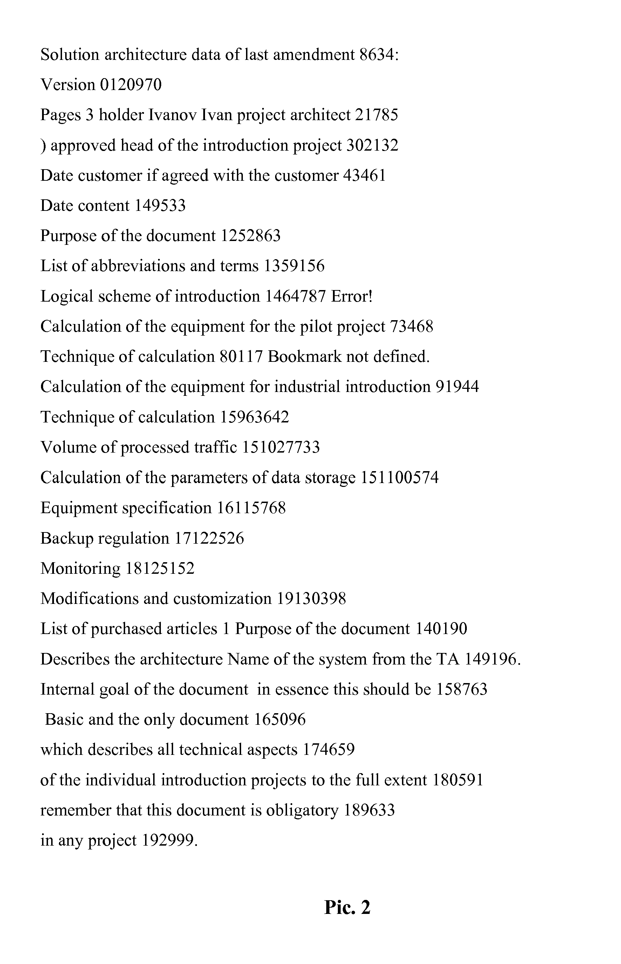

**Claims**

1. Method of automated analysis of text documents, consisting in the following:

   - all electronic files of reference documents are transformed into the preset format, distinguishing meaningful fragments, called closures, in each of them;
   - transformed electronic files of reference documents are stored in the database;
   - each electronic file of the analyzed document is transferred into the mentioned preset format;
   - coincidence of the distinguished closures in the electronic file of the analyzed document with the distinguished closures in the electronic files of reference documents is revealed;
   - relative number of closures in the electronic file of the analyzed document is calculated, which coincided with the corresponding closures of each of the electronic files of reference documents;
   - found relative numbers of coincidences are compared with the preset threshold value for revelation of availability of the text fragments from any of reference documents in the electronic file of the analyzed document.

2. Method according to claim 1, wherein the file of the text document is preliminary transformed into the binary stream, bytes of which correspond to the significant characters or punctuation marks of the natural language, used in the mentioned text document.

3. Method according to claim 2, wherein the mentioned transformation of the electronic file of the text document into the mentioned preset format is made at the expense that:

   - a lot of significant characters, as well as punctuation marks are pre-distinguished in each of natural languages used;
   - closures are distinguished from the text of the transformed document;

- insignificant symbols are deleted from each closure;
- all remaining significant characters of each closure are transformed into the lower case, getting the so-called shingle;
- hash-value of each shingle is calculated;
- a pair from the calculated hash-value of each shingle and position of this shingle in the document is placed into the inverted process of the corresponding document, representing the sorted range of the above pairs with the identifier of this document.

4. Method according to claim 1, wherein the mentioned transformation of the binary stream into the mentioned preset format is made at the expense that:

- a lot of significant characters, as well as punctuation marks are pre-distinguished in each of natural languages used;
- closures are distinguished from the text of the transformed document;
- insignificant symbols are deleted from each closure;
- all remaining significant characters of each closure are transformed into the lower case, getting the so-called shingle;
- hash-value of each shingle is calculated;
- shingles and their hash-values are selected randomly from the pre-set interval in each binary document;
- a pair from the calculated hash-value of each selected shingle and position of this shingle in the document is placed into the inverted process of the corresponding document, representing the sorted range of the above pairs with the identifier of this document.

5. Method according to claims 3 and 4, wherein the mentioned calculation of the relative number of coincidences, referred to as the similarity factor, is performed in accordance with the expression:

$$r(D_d, D_e) = \frac{|D_e| \cap |D_d|}{|D_e|},$$

where $D_d$ - reference document, $D_e$ - analyzed document, $|D|$ - number of shingles, found in the document $D$, $r(D_d, D_e)$ - similarity factor.

Solution architecture

Date of last amendment 01.01.1601 4:00

Version: 0.01011601400

Pages: 3 Holder: Ivanov Ivan

(project architect)

Approved: head of the introduction project

(...

(date _____)

Customer (if agreed with the customer)

_____ (date _____)


Content

1.  Purpose of the document

    1.2. List of abbreviations and terms

    1.3. Logical scheme of introduction

    1.4. Calculation of the equipment for the pilot project

4. Technique of calculation

5. Calculation of the equipment for industrial introduction

5.1. Technique of calculation

5.151. Volume of processed traffic

5.2 Calculation of the parameters of data storage

5.3. Equipment specification

6.4. Backup regulation

7. Monitoring

8. Modifications and customization

9. List of purchased articles


1.  Purpose of the document

The document describes the architecture of "Name of the system from the TA".

Internal goal of the document – in essence this should be the BASIC and the ONLY document, which describes all technical aspects of the individual introduction projects to the full extent, remember, that this document is OBLIGATORY in any project.


**Pic. 1**

Solution architecture data of last amendment 8634:

Version 0120970

Pages 3 holder Ivanov Ivan project architect 21785

) approved head of the introduction project 302132

Date customer if agreed with the customer 43461

Date content 149533

Purpose of the document 1252863

List of abbreviations and terms 1359156

Logical scheme of introduction 1464787 Error!

Calculation of the equipment for the pilot project 73468

Technique of calculation 80117 Bookmark not defined.

Calculation of the equipment for industrial introduction 91944

Technique of calculation 15963642

Volume of processed traffic 151027733

Calculation of the parameters of data storage 151100574

Equipment specification 16115768

Backup regulation 17122526

Monitoring 18125152

Modifications and customization 19130398

List of purchased articles 1 Purpose of the document 140190

Describes the architecture Name of the system from the TA 149196.

Internal goal of the document  in essence this should be 158763

 Basic and the only document 165096

which describes all technical aspects 174659

of the individual introduction projects to the full extent 180591

remember that this document is obligatory 189633

in any project 192999.


**Pic. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2420800
- WO 2007141666 A
- JP 2008257444 A
- US 20100205525 A
- US 6810375 B